# EUROPÄISCHE PATENTANMELDUNG

(11) **EP 2 308 310 A1**
(43) Veröffentlichungstag der Anmeldung: **13.04.2011**
(21) Anmeldenummer: 10011735.7
(22) Anmeldetag: 29.09.2010
(51) Int. Cl.: A21B 3/07, A21B 7/00

(54) **Beschickungsvorrichtung für Backöfen**

(30) Priorität: 30.09.2009 DE 102009043469
(71) Anmelder: Daub Backtechnik GmbH, 21147 Hamburg (DE)
(72) Erfinder: Möller, Thomas, 21745 Hemmoor (DE); Meyer, Gerd, 21224 Rosengarten (DE); Rücker, Andreas, 21039 Börnsen (DE)
(74) Vertreter: Glawe, Delfs, Moll

(57) **Zusammenfassung**

Die Erfindung betrifft eine Beschickungsvorrichtung (30) zur Beschickung von Backöfen (10) mit Backwaren. Die erfindungsgemäße Beschickungsvorrichtung (30) umfasst eine an einer Führungsvorrichtung (31) aufgehängte und verschiebbare Gondel (40), in der wenigstens ein Ladertisch vorgesehen ist, der sich aus der Gondel ausfahren lässt. Mit dem Ladertisch lassen sich Backwaren von Platten (14) eines Backofens (10) oder Blechen (22) eines Rollwagens (21) aufkrabbeln oder auf diesen ablegen.

Die Erfindung betrifft weiterhin eine Anordnung aus wenigstens einem Backofen (10), wenigstens einer Aufgabestelle (20) mit austauschbaren Rollwagen (21) und einer erfindungsgemäßen Beschickungsvorrichtung (30).

## Beschreibung

Die Erfindung betrifft eine Beschickungsvorrichtung zur Beschickung von Backöfen mit Backwaren. Die Erfindung betrifft weiterhin eine Anordnung aus wenigstens einem Backofen, wenigstens einer Aufgabestelle mit austauschbaren Rollwagen und einer Beschickungsvorrichtung.

In Bäckereien oder Backbetrieben werden in der Regel Backöfen eingesetzt, bei denen Backwaren in übereinander angeordneten Ebenen gebacken werden. Die Backwaren können dabei entweder auf Blechen liegen, die in im Backraum eines Backofens fest montierte mehrstöckig angeordnete Aufnahmen eingeschoben werden, oder sie liegen auf Blechen eines hitzebeständigen Rollwagens auf, der als ganzes in einen Backofen geschoben wird. Nach Ende des Backvorgangs müssen die gebackenen Backwaren aus dem Backofen geholt werden. Im Falles des Backens auf den Blechen eines Rollwagens ist es ausreichend, den gesamten Rollwagen aus dem Backofen herauszubewegen.

Besonders in Bäckereien oder Backbetrieben mit mehr als einem Backofen besteht der Bedarf, die Beschickung der Backöfen mit Backwaren wenigstens teilweise automatisiert durchzuführen.

Im Stand der Technik sind dazu Vorrichtungen bekannt, bei denen ein hitzebeständiger Rollwagen an einer Aufgabestelle von einer Beförderungsvorrichtung erfasst wird, die den Rollwagen zunächst vor die Türöffnung eines der Backöfen und anschließend in den Backraum des Backofens befördert. Nach Ablauf der Backzeit übernimmt die Beförderungsvorrichtung den Transport des Rollwagens aus dem Backraum des Backofens zur Aufgabestelle oder zu einer anderen Stelle.

Nachteilig an diesem Stand der Technik ist es, dass bei jedem Backvorgang neben den Blechen des Rollwagens auch solche Teile des Rollwagens erhitzt werden, die zum Backergebnis nicht beitragen. Diese Teile des Rollwagens geben die Hitze nach dem Backvorgang - nachdem der Rollwagen aus dem Backraum des Backofens bewegt wurde - an die Backstube ab. Bei jedem Backvorgang kommt es also zu systematischen Energieverlusten.

Noch höhere systematische Energieverluste treten auf, wenn anstelle der Bleche auf den Rollwagen Steinplatten für ein qualitativ höherwertiges Backergebnis eingesetzt werden. Diese Steinplatten wirken als Hitzespeicher die zu Beginn des Backvorgangs unter hohen Energieaufwand auf Backtemperatur gebracht werden müssen und nach Beendigung des Backvorgangs unerwünscht Hitze in die Backstube abstrahlen.

Aufgabe der vorliegenden Erfindung ist es, eine gegenüber dem Stand der Technik verbesserte Beschickungsvorrichtung zur Beschickung von Backöfen mit Backwaren zu schaffen. Eine weitere Aufgabe der Erfindung ist es, eine verbesserte Anordnung aus wenigstens einem Backofen, wenigstens einer Aufgabestelle mit austauschbaren Rollenwagen und einer Beschickungsvorrichtung zu schaffen.

Ausgehend vom eingangs genannten Stand der Technik wird diese Aufgabe durch eine Vorrichtung gemäß dem Hauptanspruch, sowie eine Anordnung gemäß dem unabhängigen Anspruch gelöst. Vorteilhafte Ausführungsformen ergeben sich aus den abhängigen Ansprüchen.

Demnach betrifft die Erfindung eine Beschickungsvorrichtung zur Beschickung von Backöfen mit Backwaren, mit wenigstens einem in eine Beschickungsrichtung aus einer Gondel ausfahrbaren Ladertisch zum Aufkrabbeln oder Ablegen von Backwaren, wobei die Gondel an einer Führungsvorrichtung aufgehängt ist und eine erste Antriebseinheit zum Verschieben der Gondel entlang der Führungsvorrichtung parallel zu dem wenigstens einen Ladertisch in eine Verschieberichtung mit einer Komponente senkrecht zur Beschickungsrichtung vorgesehen ist.

Die Erfindung betrifft weiterhin eine Anordnung umfassend wenigstens einen Backofen mit mehrstöckig angeordneten Platten im Backraum zur Aufnahme von Backwaren, wenigstens eine Aufgabestelle mit einem austauschbaren Rollwagen mit mehrstöckig angeordneten Blechen zur Aufnahme von Backwaren und eine Beschickungsvorrichtung zum Transport von Backwaren zwischen den Blechen des Rollwagens und den Platten des Backofens, wobei die Beschickungsvorrichtung wenigsten einen in eine Beschickungsrichtung aus einer Gondel ausfahrbaren Ladertisch zum Aufkrabbeln oder Ablegen von Backwaren aufweist, die Gondel an einer Führungsvorrichtung aufgehängt ist und eine erste Antriebseinheit zum Verschieben der Gondel entlang der Führungsvorrichtung parallel zu dem wenigstens einen Ladertisch in eine Verschieberichtung mit einer Komponente senkrecht zur Beschickungsrichtung vorgesehen ist.

Bevor die Erfindung im Folgenden näher erläutert wird, seien zunächst noch einige im Zusammenhang mit der Erfindung verwendete Begriffe näher erläutert.

Ein "Ladertisch" umfasst ein umlaufendes Transportband, welches über zwei parallel angeordnete Umlenkrollen läuft und ggf. durch Führungsrollen gestützt wird. Die in der Regel ebene und horizontal angeordnete Oberseite des Transportbandes dient der Ablage von Gütern - in diesem Fall von Backwaren. Indem das Transportband in Bewegung gesetzt wird, können auf dem Transportband aufliegende Güter in Förderrichtung des Transportbandes ausgetragen werden. Zur Bestückung des Transportbandes ist es ausreichend, die Güter an einem Ende des Transportbandes auf dieses aufzulegen und durch Bewegung des Transportband über den gesamten Ladertisch verteilen.

Durch die erfindungsgemäße Beschickungsvorrichtung ist es möglicht, Backwaren von einem Rollwagen in einen Backofen und umgekehrt zu befördern, ohne dass am Backvorgang unbeteiligte Komponenten auf Backtemperatur aufgeheizt werden müssen und nach dem Backvorgang Wärme an die Backstube abgeben. Vielmehr verbleiben die Platten, auf denen die Backwaren gebacken werden, bei gleichbleibender Backtemperatur im Backofen. Die Rollwagen, die dem Transport der ungebackenen bzw. gebackenen Backwaren innerhalb der Backstube dienen, werden nicht auf die Backtemperatur aufgeheizt. Vielmehr verbleiben sie bei Raumtemperatur. Der im Stand der Technik anzutreffende Energieverlust tritt bei Einsatz der erfindungsgemäßen Beschickungsvorrichtung also nicht auf. Außerdem müssen die Rollwagen nicht in dem Maße hitzebeständig ausgeführt sein, wie dies im Stand der Technik der Fall ist. Sie können daher kostengünstig hergestellt werden.

Die erfindungsgemäße Vorrichtung lässt sich gut anhand eines typischen, beispielhaften Beschickungsvorganges erläutern:
Befinden sich die zu backenden Backwaren auf Blechen eines Rollwagens, der sich im Aktionsradius der erfindungsgemäßen Beschickungsvorrichtung - bspw. in einer Aufgabestelle - befindet, kann der wenigstens eine Ladertisch so aus der Gondel in eine Beschickungsrichtung ausgefahren werden, dass die Backwaren von einem Blech des Rollwagens aufgekrabbelt wird. Dazu wird der Ladertisch dicht über das Blech geführt und das Transportband so in Bewegung gesetzt, dass sich trotz der Verschiebung des Ladertisches an der Oberseite des Ladertisches in einem absoluten Bezugssystem keine Geschwindigkeitskomponente ergibt. Durch mit der Bewegung des Transportbandes synchronisiertem Vorschub des Ladertisches können so Güter von einer ruhenden Oberfläche aufgekrabbelt werden.

Für den Vorschub des Ladertisches und die Bewegung des Transportbandes können separate Antriebselemente vorgesehen sein. Es ist aber auch möglich, dass eine steuerbare, mechanische Kupplung vorgesehen ist, über die sich der Vorschub des Ladetisches wahlweise in Bewegung des Transportbandes umsetzen lässt.

In diesem Zusammenhang ist es bevorzugt, wenn der Ladertisch an der Seite, an der die Backwaren aufgekrabbelt werden, abgeflacht ist, so dass die Stufe zwischen Blech und Ladertisch möglichst gering ist. Die Umlenkrolle an dieser Seite des Ladertisches wird auch vordere Umlenkung bzw. Messerkante genannt.

Sind alle Backwaren vom Blech aufgekrabbelt, wird der Ladertisch entgegen der Beschickungsrichtung in die Gondel zurück verfahren, ohne dass das Transportband bewegt wird. Die Backwaren befinden sich dann auf dem Ladertisch innerhalb der Gondel.

Anschließend wird die Gondel, die an einer Führungsvorrichtung aufgehängt ist, durch eine erste Antriebseinheit verschoben, und zwar in eine Verschieberichtung, die eine Komponente senkrecht zur Beschickungsrichtung aufweist. Vorzugsweise kann die Verschieberichtung senkrecht zur Beschickungsrichtung sein. Die Verschiebung erfolgt außerdem in einer Ebene parallel zum Ladertisch und somit in der Regel horizontal.

Die Gondel wird vor die Türöffnung eines Backofens verschoben. Der Ladertisch wird dann in Beschickungsrichtung ausgefahren und zwar so, dass er in den Backraum des Backofens ragt und sich dicht über einer im Backofen angeordneten horizontalen Platte befindet. Beim anschließenden Herausbewegen des Ladertisches aus dem Backraum des Backofens wird das Transportband so in Bewegung gesetzt, dass sich trotz der Verschiebung des Ladertisches die Oberseite des Ladertisches in einem absoluten Bezugssystem keine Geschwindigkeitskomponente ergibt. Die Backwaren werden dadurch auf die Platte des Backofens abgelegt.

Der Ladertisch befindet sich nur vergleichsweise kurze Zeit im Backofen und nimmt dadurch nur wenig Wärmeenergie auf. Dementsprechend wird auch, sobald sich der Ladertisch wieder außerhalb des Backofens befindet, nur wenig Wärmeenergie an die Backstube abgegeben. Der Energieverlust gegenüber der aus dem Stand der Technik bekannten Lösung ist somit reduziert.

Nach Abschluss des Backvorgangs wird der dargestellte Beschickungsvorgang in umgekehrter Reihenfolge durchgeführt. Die fertig gebackenen Backwaren werden so aus dem Backofen zurück zum Rollwagen transportiert und auf diesem abgelegt.

Das Öffnen und Schließen der Ofentüren kann bevorzugt manuell erfolgen. Das hat den Vorteil, dass bereits vorhandene Backstuben mit einem oder mehreren Backöfen mit einer erfindungsgemäßen Beschickungsvorrichtung nachgerüstet werden können, ohne das an den Öfen selbst Änderungen notwendig wären. Die Nachrüstung ist somit kostengünstig möglich. Auch ist gegenüber einem vollautomatischen System mit automatisch betätigten Türen, welches aus arbeitsschutzrechtlichen Gründen vollständig eingehaust sein muss, eine Störungsbeseitigung einfacher möglich. Bei einer Störung und einem damit verbundenen Abschalten der Beschickungsvorrichtung oder einzelner Öfen können aufgrund der manuellen Bedienbarkeit der einzelnen Ofentüren und der fehlenden Einhausung die anderen Backöfen dennoch weiter betrieben werde. Auch wenn in einem solchen Fall die Beschickung der Öfen ggf. von Hand zu erfolgen hat, muss - anders als bei einem eingehausten, vollautomatischen System - nicht die vollständige Anlage, inklusive aller Backöfen abgestellt werden. Die laufende Produktion wird dadurch weit weniger gestört.

Es ist bevorzugt, wenn an der Führungsvorrichtung eine zweite Antriebseinheit zum Verschieben der Gondel in Beschickungsrichtung vorgesehen ist. Dadurch ist es möglich, die Gondel so nah wie möglich an den Rollwagen bzw. den Backofen zu verfahren und somit den Überstand des vollständig ausgefahrenen Ladertisches über die Gondel und somit die mechanischen Belastungen auf die Gondel möglichst gering zu halten. Zusätzlich ist es durch die Verschiebemöglichkeit der Gondel parallel zur Beschickungsrichtung möglich, die Gondel soweit von den Türöffnungen der Backöfen wegzubewegen, dass ggf. vorhandene Ofentüren problemlos auf und zu schwingen können.

Es ist bevorzugt, dass der wenigstens eine Ladertisch in Richtung seiner Flächennormalen verfahrbar ist. Dadurch ist es möglich, Backwaren von verschiedenen Ebenen des Rollwagens und/oder Backofens aufzukrabbeln bzw. dort abzulegen. Der Ladertisch kann auch aus der Gondel ausgefahren werden, um eine Bearbeitung der auf dem Ladertisch befindlichen Backwaren zu ermöglichen. Ein einzelner, vertikal verfahrbarer Ladertisch ist ausreichend, die Backwaren auf allen Ebenen eines Rollwagens auf verschiedene Ebenen eines oder mehrerer Backöfen zu verteilen.

Bevorzugt ist es, wenn wenigstens zwei Ladertische vorgesehen sind. Dadurch kann die Effizienz des Beschickungsvorgangs erhöht werden. Besonders bevorzugt ist es, wenn die Anzahl der Ladertische der Anzahl der Platten in den Backöfen bzw. der Anzahl der Bleche in den Rollwagen entspricht. Dadurch ist es möglich, alle Backgüter von einem Rollwagen gleichzeitig in einen Backofen und umgekehrt zu transportieren. Ist die vertikale Anordnung der Ladertische an die vertikale Anordnung der Platten in den Backöfen und/oder der Bleche der Rollwagen angepasst, kann auf eine vertikale Verschiebbarkeit der Ladertische verzichtet werden.

Es ist auch möglich, dass die Gondel gegenüber der Führungsvorrichtung vertikal, d.h. in Richtung der Flächennormalen des wenigstens einen Ladertisches, verfahrbar ist. Weisen die Bleche der Rollwagen untereinander die gleichen vertikalen Abstände auf wie die Platten in den Öfen, so ist es möglich, das gesamte Backgut von einem Rollwagen gleichzeitig in einen Backofen und umgekehrt zu transportieren, auch wenn die vertikale Anordnung der Bleche in den Rollwagen nicht an diejenige der Platten in den Backöfen angepasst ist, d.h. es liegt ein Höhenversatz zwischen den Platten in den Backöfen und den Blechen in den Rollwagen vor. Es ist auch möglich, dass die Platten einzelner Backöfen und/oder die Bleche einzelner Rollwagen einen Höhenversatz gegenüber den Platten anderer Backöfen und/oder den Blechen anderer Rollwagen aufweisen. An den Backöfen und/oder Rollwagen können Markierungen angebracht sein, die den Höhenversatz der Platten in den Öfen bzw. der Bleche in den Rollwagen gegenüber einem Bezugswert anzeigen.

Die vertikale Verfahrbarkeit der Gondel kann bevorzugt durch ein Hubsystem zwischen Gondel und Führungsvorrichtung erreicht werden, wobei das Hubsystem ein Spindelhubsystem sein kann.

Durch die vertikale Verfahrbarkeit der Gondel ist es auch möglich, dass während des Ablegens von Backwaren auf die Platten in den Öfen zwischen den Platten in den Öfen und den Ladertischen ein solcher vertikaler Abstand eingehalten wird, dass die Backwaren bei Entladen von den Ladertischen auf die Platten in den Öfen herunterfallen und anschließend auf die Seite oder den Kopf rollen, also gewendet werden.

Die Ladertische können jeweils ein eigenes Antriebselement für das Ausfahren aus der Gondel aufweisen. Sie lassen sich dann einzeln bewegen. Es ist auch möglich, dass für wenigstens zwei Ladertische ein gemeinsames Antriebselement vorgesehen ist, so dass die wenigstens zwei Ladertische gemeinsam ausfahrbar sind. Es können auch alle Ladertische der Beschickungsvorrichtung durch ein gemeinsames Antriebselement ausfahrbar sein. Sofern wenigstens zwei Ladertische ein gemeinsames Antriebselement aufweisen, ist bevorzugt, wenn die Ladertische einzeln vom Antriebselement entkoppelbar sind. Es ist so möglich, einen Ladertisch manuell aus der Gondel heraus zu verschieben. Bei Betriebsstörungen kann dies der Problembehebung dienen.

Es kann vorgesehen sein, dass der oder die Ladertische auch entgegen der Beschickungsrichtung aus der Gondel ausfahrbar sind. Dadurch ist es möglich, Backöfen und Rollwagen zu beiden Seiten der Führungsvorrichtung zu beschicken oder die Backwaren zu entnehmen.

Vorzugsweise kann die Gondel auch drehbar in der Ebene des wenigstens einen Ladertisches sein. Dadurch kann bspw. auch ein Backofen, der am Ende der Führungsvorrichtung, senkrecht zu den anderen Backöfen angeordnet ist, durch die erfindungsgemäße Beschickungsvorrichtung bedient werden.

Um die mechanische Belastung der Führungsvorrichtung zu reduzieren kann vorgesehen sein, auf dem von der Führungsvorrichtung entfernten Ende der Gondel Bodenrollen vorzusehen. Diese Bodenrollen bilden dann einen zusätzlichen Lastpfad, über den die Gewichtskraft der Gondel mit darauf befindlichen Backwaren abgeleitet werden kann. Die Bodenrollen sind dabei so ausgestaltet, dass sie die Verschiebbarkeit der Gondel nicht einschränken. Führungen am Boden sind hierfür nicht erforderlich. Der Boden im Bereich der Beschickungsvorrichtung kann also weiterhin eben und glatt ausgeführt sein, wodurch er leicht zu reinigen ist. Um ein Blockieren der Bodenrollen durch Aufnahme von Rückständen auf die Rollfläche der Bodenrollen zu verhindern sind bevorzugt Abstreifer und/oder Bürsten an den Bodenrollen vorgesehen, die solche Rückstände von den Rollflächen lösen und entfernen. Die Bodenrollen können auch an einer Stützvorrichtung befestigt sein, die sich vom Wagen bzw. der Aufhängung der Gondel bis zum Boden erstreckt. Ist die Führungsvorrichtung ausreichend stabil, kann auf entsprechende Bodenrollen und/oder Stützvorrichtung verzichtet werden.

Es ist bevorzugt, wenn der oder die Ladertische Stützrollen aufweisen. Die Stützrollen sind an der Unterseite des Ladertisches angeordnet und dienen der Abstützung der Ladertische auf den Blechen des Rollwagens und/oder den Platten der Öfen. Indem sich die Ladertische während des Ausfahrens aus der Gondel mit den Stützrollen auf den Blechen der Rollwagen oder den Platten der Backöfen abstützen können, wird die mechanische Belastung der Gondel, die beim Herauskragen des oder der Ladertische entsteht, deutlich reduziert.

Weiter bevorzugt ist es, wenn der Ladertisch eine Saugdüse, vorzugsweise mit Bürste, aufweist. Durch eine entsprechende Saugdüse ist es möglich, die Platten der Öfen und/oder die Bleche der Rollwagen während des Beschickungsvorgangs von Rückständen, wie bspw. Krümeln, zu befreien. So kann ein ungewolltes Einbacken von Rückständen andere Backwaren wirksam verhindert werden. Die Saugdüse ist dazu bevorzugt in dem Bereich der vorderen Umlenkung bzw. der Messerkante des Ladertisches vorgesehen, über die die Backwaren aufgekrabbelt werden.

Zur Ansteuerung der Antriebseinheiten zur Verschiebung der Gondel und/oder zur Betätigung der Ladertische ist vorzugsweise eine feste, eine verkabelte und/oder eine kabellose Bedienkonsole vorgesehen. Es ist auch möglich, dass eine programmierbare Steuerungseinheit vorgesehen ist, die eine Ansteuerung der einzelnen Antriebseinheiten nach vorgegebenen Ablaufschritten übernimmt.

Die Erfindung betrifft weiterhin eine Anordnung umfassend wenigstens einen Backofen mit mehrstöckig angeordneten Platten zur Aufnahme von Backwaren, wenigstens einer Aufgabestelle mit einem austauschbaren Rollwagen mit mehrstöckig angeordneten Blechen zur Aufnahme von Backwaren, sowie einer erfindungsgemäßen Beschickungsvorrichtung. Betreffend die Beschickungsvorrichtung wird auf die oben stehende Erläuterung verwiesen.

Es ist bevorzugt, dass die Platten des Backofens Steinplatten sind. Mit Steinplatten lässt sich ein qualitativ hochwertiges Backergebnis erzielen. Durch die erfindungsgemäße Beschickungsvorrichtung ist es möglich, die Backwaren direkt auf die Platten bzw. Steinplatten der Backöfen zu legen.

Bevorzugt ist es, wenn die vertikale Anordnung der einzelnen Platten bzw. Bleche aller Backöfen und Rollwagen der Anordnung gleich ist. Sind darüber hinaus in der Gondel Ladertische in der gleichen vertikalen Anordnung vorgesehen können alle Backwaren auf den Blechen eines Rollwagens bzw. Platten eines Ofens gleichzeitig von den Ladertischen aufgenommen werden, ohne dass ein vertikales Verfahren der Ladertische erforderlich wäre. Ebenfalls ist eine gleichzeitige Beschickung aller Bleche bzw. Platten mit Backwaren möglich.

Bei einer halbautomatischen Beschickung, bei der die Ofentüren der Backöfen manuell bedient werden, kann über die Bedienkonsole die Beschickungseinrichtung gesteuert werden. Nach dem manuellen Öffnen einer Ofentür kann die Beschickungseinrichtung so über die Bedienkonsole gesteuert werden, dass sie Backwaren im Backofen ablegt oder von dort aufkrabbelt. Gleiches gilt für die Be- und Entladung der Rollwagen. Vorzugsweise ist eine Steuerungseinheit vorgesehen, die einzelne Schritte der Beschickungseinrichtung, bspw. die einzelnen Schritte des Aufkrabbelns, wie sie oben beschrieben sind, zu einem über die Bedienkonsole abrufbaren Programm zusammenfasst.

Um ein vollautomatisiertes Beschicken der Backöfen zu ermöglichen, können automatische Türöffnungsvorrichtungen vorgesehen sein, mit denen die Ofentüren der Backöfen einzeln geöffnet und geschlossen werden können. Ein manuelles Öffnen und Schließen der Ofentüren entfällt somit.

Die Ofentüren der Backöfen können auch als Schiebe- oder Schwebetüren ausgeführt sein, wobei bei verschiedenen Backöfen unterschiedliche Türsysteme eingesetzt werden können. Die Ofentüren können in ihrer Offenstellung arretierbar sein. Hierzu kann an der Ofentür ein Blechstreifen mit einem oder mehreren Einschnitten oder Vertiefungen vorgesehen sein, in welcher eine durch eine Feder belastete Kugel, die am Backofen befestigt ist, eingreifen kann. Befindet sich die Ofentür in einer Position, in der die federbelastete Kugel in eine Vertiefung des Blechstreifens eingreift, so ist sie in dieser Position arretiert. Zum Lösen der Arretierung muss die Federkraft überwunden werden, mit der die Kugel in die Vertiefung des Blechstreifens gedrückt wird.

Es ist auch möglich, dass bei der erfindungsgemäßen Anordnung ein Auskühlsystem vorgesehen ist. Die fertigen Backwaren werden von der Beschickungseinrichtung dann von dem Ofen nicht mehr zurück zur Aufgabestelle, sondern vielmehr zum Auskühlsystem transportiert.

Bei dem Auskühlsystem kann es sich um ein um einen Paternosterturm handeln, bei dem einzelne Auskühlflächen umlaufen. Die Auskühlflächen können als Bleche ausgestaltet sein. Die Abladung der Backwaren von der Beschickungsvorrichtung auf die Auskühlflächen erfolgt dann in der gleichen, oben beschriebenen Art und Weise wie die Abladung auf einen Rollwagen. Es ist auch möglich, dass die Auskühlflächen ein umlaufendes, antreibbares Transportband aufweisen. Das Abladen geschieht dann, indem ein Ladertisch in Förderrichtung seines Transportbandes neben einer Auskühlfläche positioniert wird und die beiden Transportbänder der Ladertisches und der Auskühlfläche in die gleiche Richtung und vorzugsweise mit der gleichen Geschwindigkeit bewegt werden.

Die Austragung der ausgekühlten Backwaren aus dem Auskühlsystem kann durch entsprechendes Bewegen des Transportbandes erfolgen. Alternativ oder sofern bei dem Auskühlsystem keine Transportbänder vorgesehen sind, kann die Austragung über einen Pusher erfolgen. Die Austragung erfolgt auf ein Bandsystem oder eine Rutsche, über die die Backwaren zu Verpackungs-, Sortierungs- und/oder Schichtungsstation gelangt.

Das Auskühlsystem kann eine Kühlluftzuführung aufweisen, mit der der Auskühlungsvorgang der Backwaren beschleunigt werden kann. Es ist aber auch möglich, dass die Backwaren bei Raumtemperatur auskühlen.

Die Erfindung wird nun anhand vorteilhafter Ausführungsformen unter Bezugnahme auf die beigefügten Zeichnungen beispielhaft beschrieben. Es zeigen:
- Fig. 1:: eine Vorderansicht einer erfindungsgemäßen Anordnung aus Öfen, Aufgabestellen mit Rollwagen und einer ersten er- findungsgemäßen Beschickungsvorrichtung;
- Fig. 2:: eine Seitenansicht der Anordnung aus Figur 1;
- Fig. 3:: eine Draufsicht der Anordnung aus Figur 1;
- Fig. 4-6:: Detailansichten der Beschickungsvorrichtung aus Figur 1 in verschiedenen Zuständen;
- Fig. 7-8:: Detailansichten einer Aufgabestelle aus Figur 1; und
- Fig. 9:: eine zweite erfindungsgemäße Beschickungsvorrichtung.

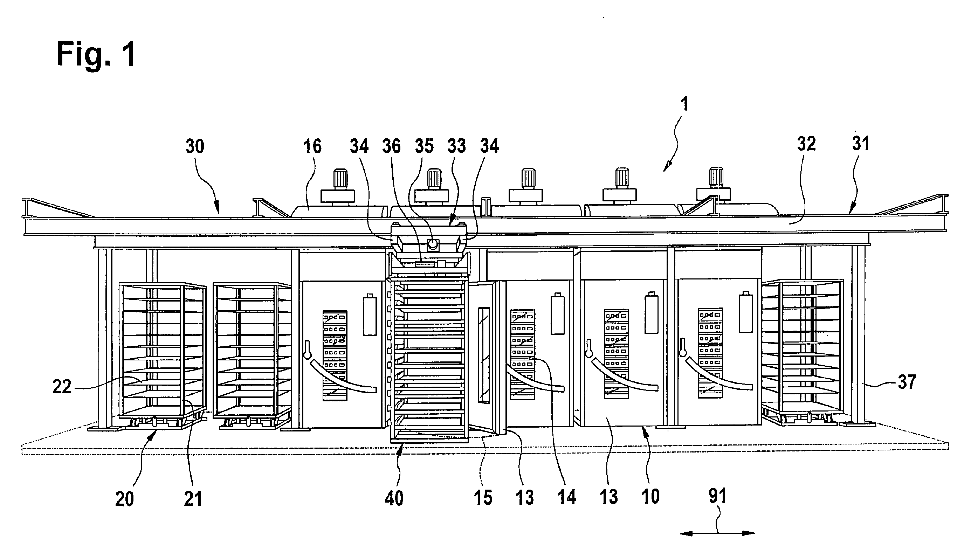

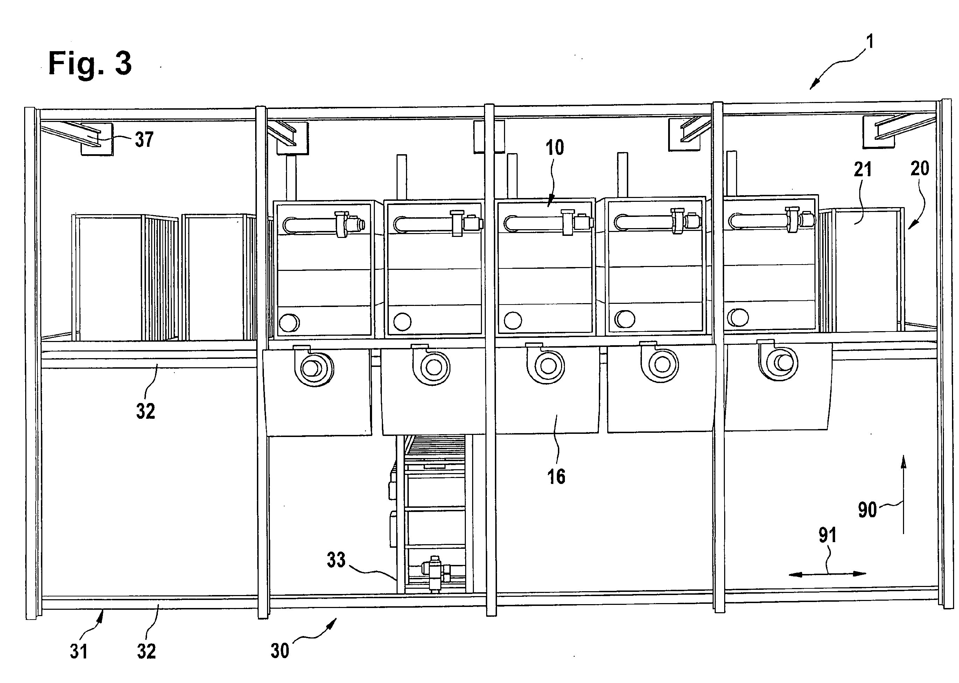

In Figuren 1 bis 3 ist eine erfindungsgemäße Anordnung 1 dargestellt. Die Anordnung 1 umfasst mehrere Backöfen 10, mehrere Aufgabestellen 20 mit austauschbaren Rollwagen 21 und eine Beschickungsvorrichtung 30.

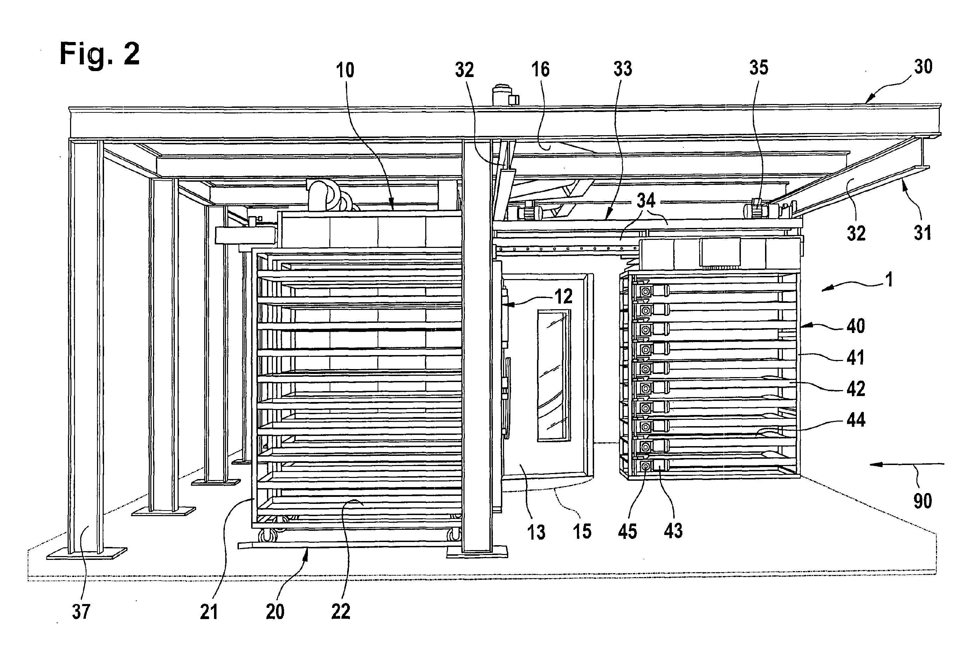

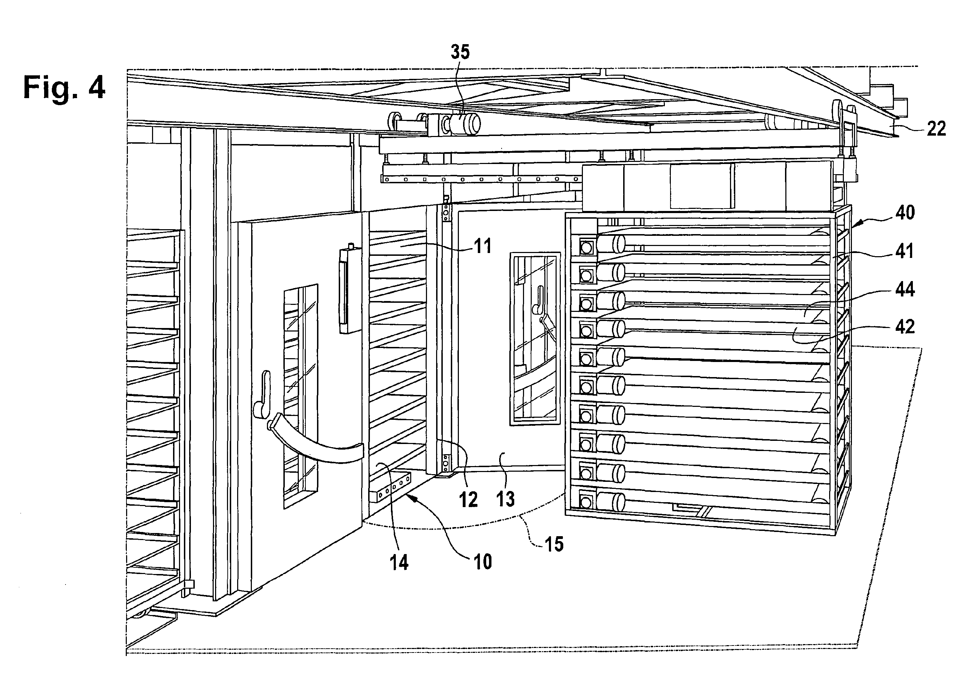

Die Backöfen 10 umfassen jeweils einen Backraum 11 (vgl. Figur 4) zum Backen von Backwaren, der auf einer Seite eine Türöffnung 12 aufweist. Die Türöffnung 12 lässt sich mit einer schwenkbaren Ofentür 13 verschließen. Im Backraum 11 sind mehrstöckig Steinplatten 14 angeordnet, auf denen die Backwaren während des Backvorgangs zu liegen kommen. Oberhalb des Schwenkbereiches (in Figur 2 durch Strichlinie 15 angedeutet) der Ofentür 13 ist ein Abzug 16 vorgehen, mit dem heiße Luft, die nach dem Öffnen der Ofentür 13 aus dem Backraum 11 entweicht, abgesaugt werden kann. Dadurch wird verhindert, dass sich die Backstube, in der sich die Anordnung 1 befindet, unnötig aufheizt.

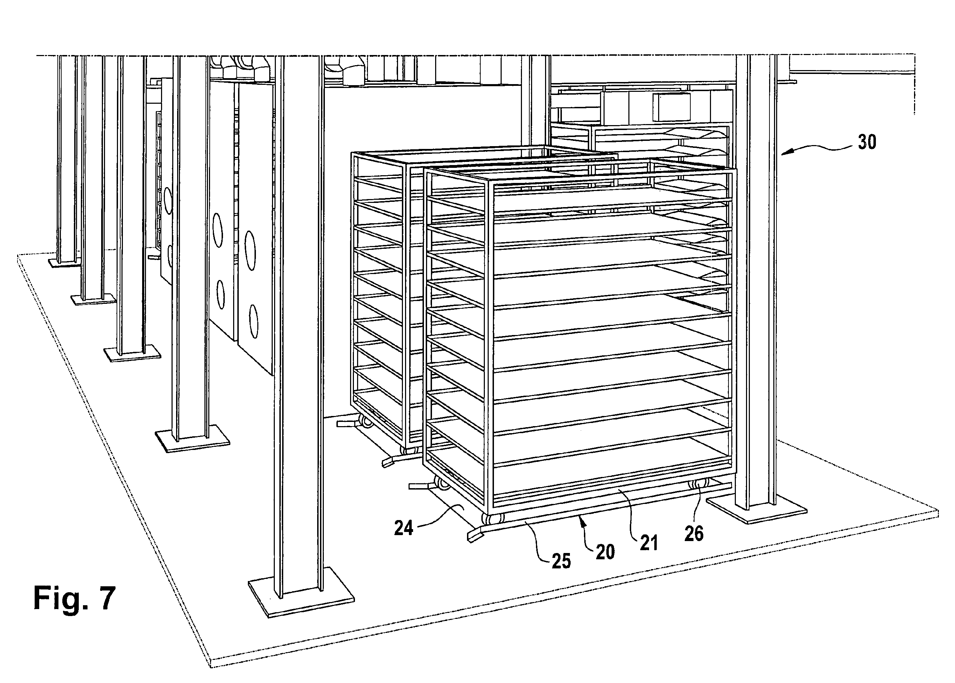

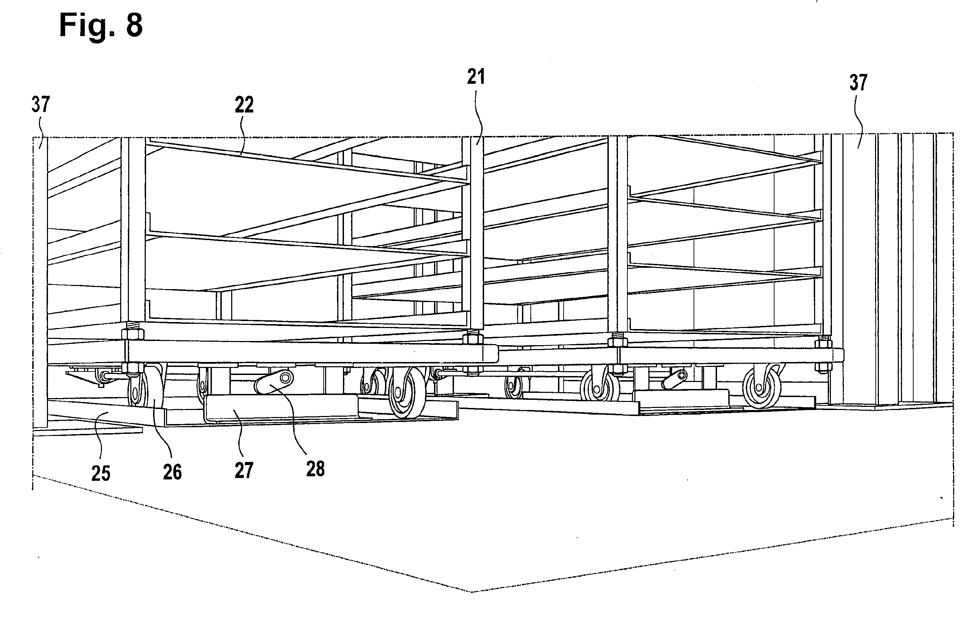

Die Aufgabestellen 20, die später anhand der Figuren 7 und 8 näher erläutert werden, umfassen einen austauschbaren Rollwagen 21, mit dem Backwaren durch die Backstube zu Anordnung 1 hin und fertig gebackene Backwaren von der Anordnung 1 weg transportiert werden können. Durch eine Aufgabestelle 20 wird sichergestellt, dass sich der jeweils darin befindliche Rollwagen 21 in einer definierten Position im Aktionsradius der Beschickungsvorrichtung 30 befindet. Der Rollwagen 21 umfasst mehrere übereinander angeordnete Bleche 22, auf denen sowohl ungebackene als auch fertig gebackene Backwaren zu liegen kommen können.

Die Backöfen 10 und Rollwagen 21 sind bevorzugt so aufeinander abgestimmt, dass die Bleche 22 zumindest eines, in einer Aufgabestelle 20 befindlichen Rollwagens 21 auf gleichen Höhen mit den Steinplatten 14 zumindest eines Backofens 10 befinden. Im dargestellten Ausführungsbeispiel sind die Bleche 22 aller in den Aufgabestellen 20 befindlichen Rollwagen 21 auf den gleichen Höhen wie den Steinplatten 14 aller Backöfen 10 angeordnet.

Die Türöffnungen 12 der Öfen 10 sind in einer gemeinsamen Ebene angeordnet. Die Beschickung mit Backwaren erfolgt eine Richtung senkrecht zu der gemeinsamen Ebene der Türöffnungen 12. Die sogenannte Beschickungsrichtung (angedeutet durch Pfeil 90) zeigt senkrecht von der gemeinsamen Ebene der Türöffnungen 12 in Richtung der Backräume 11 der Öfen. Die Aufgabestellen 20 sind so eingerichtet, dass die darauf befindlichen Rollwägen 21 sich mit einer für die Beschickung durch die Beschickungsvorrichtung 30 geeigneten Seite ebenfalls in der Ebene der Türöffnungen 12 befinden.

Die Beschickungsvorrichtung 30 umfasst eine Führungsvorrichtung 31, bei der an zwei parallel zur Ebene der Türöffnungen 12 angeordneten Schienen 32 ein Wagen 33 läuft. Der Wagen 33 umfasst wiederum zwei Schienen 34, die sich unterhalb der Schienen 32 befinden. An den Schienen 34 des Wagens 33 ist eine Gondel 40 aufgehängt. Der Wagen 33 lässt sich durch ein erstes Antriebselement 35 entlang der Schienen 32 verschieben. Die Gondel 40 lässt sich durch ein zweites Antriebelement 36 entlang der Schienen 34 des Wagens 33 verschieben. Durch das erste Antriebselement 35 lässt sich die Gondel 40 also in Richtung senkrecht zur Beschickungsrichtung 90 verschieben, der sog. Verschieberichtung (angedeutet durch Doppelpfeil 91). Durch das zweite Antriebselement 36 ist eine Verschiebung der Gondel 40 in und entgegen der Beschickungsrichtung 90 verschieben.

Die erste Endpositionen der Gondel 40 an den Schienen 34 des Wagens 33 - die in den Figuren 1 bis 3 dargestellt ist - ist so ausgestaltet, dass die Gondel 40 allein durch Bewegung entlang der Schienen 34 des Wagens 33 aus dem Schwenkbereich 15 der Ofentüren 13 verschieben lässt. Die Ofentüren 13 lassen sich nach entsprechendem Verschieben der Gondel 40 in die Endposition der Schienen 34 des Wagens 33 problemlos öffnen und schließen. Die Bedienung der Ofentüren 13 erfolgt manuell. Die erfindungsgemäße Beschickungsvorrichtung 30 kann mit Backöfen 10 eingesetzt werden, deren Ofentüren 13 sich manuell betätigen lassen. Das bietet den Vorteil, dass auch Backstuben mit bereits vorhandenen Backöfen 10 mit einer erfindungsgemäßen Beschickungsvorrichtung 30 nachgerüstet werden können, ohne dass die Backöfen 10 selbst verändert werden müssten. Insbesondere entfällt eine teure Nachrüstung von Türöffnungsantrieben und die Einhausung der gesamten Anlage, wie sich aus Arbeitssicherheitsgründen bei entsprechenden vollautomatischen Anlagen notwendig ist. Insbesondere letzteres lässt sich im Falle der Nachrüstung mit Beschickungsvorrichtungen im Regelfall - wenn überhaupt - nur schwer realisieren. Es ist aber auch möglich, dass Türöffnungsantriebe vorgesehen sind, die ein automatisches Öffnen und Schließen der Ofentüren 13 ermöglichen.

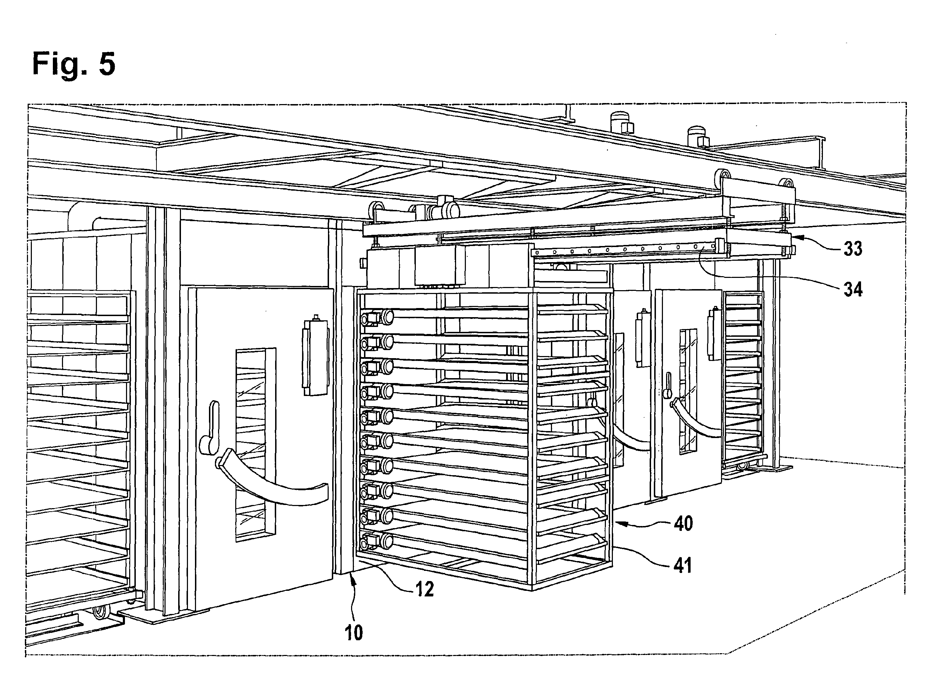

In der anderen Endposition der Gondel 40 an den Schienen 34 des Wagens 33 befindet sich die Gondel 40 möglichst nahe an der gemeinsamen Ebene der Türöffnungen 12 (vgl. Figur 5, in der sich die Gondel 40 in der beschriebenen Endposition entlang der Schienen 34 des Wagens 33 befindet).

Die Gondel 40 hängt einzig und allein an der Führungsvorrichtung 31. Die Führungsvorrichtung 31 ist an einem Stützgerüst 37 befestigt, das eine ausreichende Höhe aufweist, dass sich die Schienen 32 und der Wagen 33 oberhalb der Ofentüren 13 befinden. Die Ofentüren 13 kommen mit den Schienen 32 oder dem Wagen 33 nicht in Kontakt. Die Benutzung der Ofentüren 13 ist durch die Führungsvorrichtung 31 nicht eingeschränkt. Der Boden vor den Backöfen 10 ist eben und glatt ausgestaltet, wodurch er sich einfach reinigen lässt.

Die Gondel 40 umfasst einen Käfig 41 in der Ladertische 42 mehrstöckig übereinander angeordnet sind. Jeder Ladertisch 42 lässt sich einzeln durch eine ihm zugeordnete dritte Antriebseinheit 43 in Beschickungsrichtung 90 aus dem Käfig 41 ausfahren. Im ausgefahrenen Zustand ragt ein Ladertisch 42 also aus dem Käfig 41 heraus.

Der Ladertisch 42 umfasst ein Transportband 44, welches über zwei parallel zur gemeinsamen Ebene der Türöffnungen 12 angeordnete Umlenkrollen (nicht dargestellt) geführt ist. Das Transportband 44 bildet die Fläche des Ladertisches 42, auf dem das Backwaren zu liegen kommt. Das Transportband 44 jedes Ladertisches 42 lässt sich durch eine jeweilige vierte Antriebseinheit 45 bewegen.

Die Ladertische 42 sind so in der Gondel 40 angeordnet, dass sie sich im ausgefahrenen Zustand dicht über den Platten 14 der Backöfen 10 bzw. den Blechen 22 der Rollwagen 21 befinden. Ein vertikales Verfahren der Ladertische 42 innerhalb der Gondel 40 ist bei dem dargestellten Ausführungsbeispiel nicht notwendig. Zur Erreichung einer größeren Variabilität bei der Verwendung von Rollenwagen und/oder Backöfen kann jedoch eine vertikale Verfahrbarkeit einzelner oder aller Ladertische 42 vorgesehen sein.

Um die Belastungen auf den Gondel 40 durch das Ausfahren der Ladertische 42 zu reduzieren, können auf der Unterseite der Ladertische 42 Stützrollen vorgesehen sein, die auf den Platten 14 oder Blechen 22 laufen. Dadurch wird das Biegemoment auf die Gondel 40 durch die herausragenden Ladertische 42 minimiert.
Das Abladen von Backwaren in einen Backofen 10 sowie das Aufkrabbeln der Backwaren aus dem Backofen 10 nach durchlaufendem Backvorgang wird nun anhand der Figuren 4 bis 6 erläutert.

Die mit Backwaren (nicht dargestellt) auf den Ladertischen 42 beladene Gondel 40 wird entlang der Schienen 32 der Führungsvorrichtung 31 durch die erste Antriebseinheit 35 so verschoben, dass sie sich vor der Türöffnung 12 eines Backofens 10 befindet (vgl. Figur 4). Dabei befindet sie sich entlang der Schienen 34 des Wagens 33 in der einen Endposition, so dass der Schwenkbereich 15 der Ofentür 13 des Backofens 10 frei ist. Die Ofentür 13 kann entweder manuell oder über einen geeigneten Antrieb geöffnet werden.

Nach dem Öffnen der Ofentür 13 wird die Gondel 40 entlang der Schienen 34 des Wagens 33 durch die zweite Antriebseinheit 36 in die andere Endposition verfahren, d.h. die Gondel 40 wird an die Türöffnung 12 des Backofens 10 herangeschoben (vgl. Figur 5).

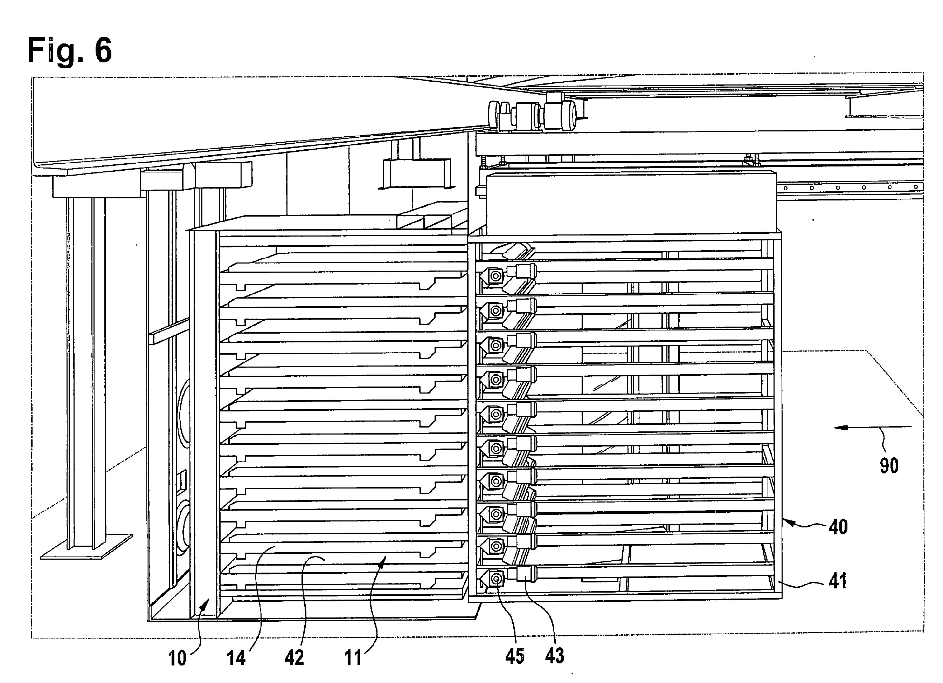

Anschließend werden die Ladertische 42 ausgefahren, so dass sie dicht über den Platten 14 des Ofens 10 liegen (vgl. Schnittdarstellung in Figur 6). Die Ladertische 42 können sich dabei mit Stützrollen (nicht dargestellt) auf den Platten 14 abstützen, damit die Belastung auf den Käfig 41 bzw. die Gondel 40 möglichst gering gehalten wird. Da jeder Ladertisch 42 eine eigene dritte Antriebseinheit 43 aufweist, müssen nicht alle Ladertische 42 ausgefahren werden. Vielmehr können nur diejenigen ausgefahren werden, auf denen sich Backwaren befinden oder bei denen die korrespondierende Platte 14 des Backofens 10 leer ist. Es ist jedoch auch möglich das zwei oder mehrere Ladertische 42 - ggf. sogar alle Ladertische 42 - durch eine gemeinsame dritte Antriebseinheit 43 angetrieben werden.

Nach dem Ausfahren der Ladertische 42 aus der Gondel 40 befindet sich das Backwaren im Backraum 11 des Backofens 10. Es muss dann noch von den Ladertischen 42 auf die Platten 14 umgeladen werden, wobei sich die horizontale Position der einzelnen Backwaren im Wesentlichen nicht mehr ändern sollte.

Dies wird erreicht, indem die Ladertische 42 entgegen der Beschickungsrichtung 90 wieder in die Gondel 40 zurück verfahren werden, wobei jedoch die vierten Antriebseinheiten 45 die Transportbänder 44 der Ladertische 42 so antreiben, dass sich auf der Oberseite der Ladertische 42 in einem absoluten Bezugssystem keine Geschwindigkeit in oder entgegen der Beschickungsrichtung 90 ergibt. Die Ladertische 42 werden praktisch unter den Backwaren weggezogen, ohne dass die Backwaren in horizontaler Richtung beschleunigt werden.

Anschließend wird die Gondel wieder in die in Figur 4 dargestellt Position verfahren und die Ofentüre 13 kann verschlossen werden. Der Backwaren können dann gebacken werden.

Nach Beendigung des Backvorgangs wird die Ofentüre 13 wieder geöffnet und die Gondel 40 wird in die in Figur 4 dargestellte Position verfahren. Die Backwaren (nicht dargestellt) befindet sich nun auf den Platten 14 des Ofens 10, während die Ladertische 42 der Gondel 40 backwarenfrei sind.

Die Gondel 40 wird durch die Antriebseinheit 36 entlang der Schienen 34 des Wagens 33 in Beschickungsrichtung 90 verschoben, bis er direkt vor der Türöffnung 12 des Backofens 10 zu stehen kommt (vgl. Figur 5). Die auf den Platten 14 im Backofen 10 befindlichen Backwaren werden dann von den Ladertischen 42 aufgekrabbelt. Dazu werden die Ladertische 42 aus der Gondel 40 in Beschickungsrichtung 90 ausgefahren. Gleichzeitig werden die Transportbänder 44 der Ladertische so angetrieben, dass die Oberseite der Ladertische 42 in einem absoluten Bezugssystem keine Geschwindigkeit in oder entgegen der Beschickungsrichtung 90 aufweist. Der Ladertisch 42 wird also zwischen die Platte 14 und die Backwaren geschoben, ohne dass eine horizontale Beschleunigung auf die Backwaren übertragen wird.

Um zu verhindern, dass die Backwaren nicht aufgekrabbelt, sondern vielmehr vor dem ausfahrenden Ladertisch 42 hergeschoben werden, ist vorgesehen, die Kante des Ladertisches 42, an der die Backwaren aufgekrabbelt werden, möglicht flach zu gestalten, so dass die Stufe zwischen Platte 14 und Ladertisch 42 entlang dieser Kante möglichst gering ist. Erreicht werden kann dies, indem die entlang der Kante verlaufende Umlenkrolle einen möglichst geringen Durchmesser aufweist.

Sind alle Backwaren auf den Ladertischen 42 aufgekrabbelt, können die Ladertische 42 wieder in die Gondel 40 verfahren werden, wobei die Transportbänder 44 der Ladertische 42 ruhen. Die Backwaren befinden sich dann auf den Ladertischen 42 innerhalb der Gondel 40 und können zu einer Aufgabestelle 20 transportiert werden.

Die Be- und Entladung von Rollenwagen 21 in Aufgabestellen 20 erfolgt analog zur dargestellten Beschickung und Entladung der Öfen 10.

Die Aufgabenstellen 20 sind in Figuren 7 und 8 näher dargestellt. Die Aufgabenstellen 20 dienen dazu, dass sich Rollenwagen 21, die durch die Beschickungsvorrichtung 30 be- und/oder entladen werden sollen, in einer definierte Position befinden. Die Aufgabenstellen 20 umfassen Bodenplatten 24, die eine Führung 25 für die Rollen 26 der Rollenwagen 21 umfassen. Wird ein Rollenwagen 21 auf eine Bodenplatte 24 einer Aufnahmestelle gerollt, so wird er durch die Führungen 25 in eine definierte Position gelenkt. Die Position ist dann erreicht wenn der Rollenwagen 21 oder einzelne Rollen 26 gegen einen Anschlag 27 stoßen. Es ist möglich den Rollenwagen 21 in dieser Position durch ein Befestigungselement 28 lösbar zu fixieren. Dass der Rollenwagen 21 sich in einer definierten Position in der Aufgabestelle 20 befindet, ist vorteilhaft für ein problemloses be- und entladen durch die Beschickungsvorrichtung 30.

Die Ansteuerung der ersten bis vierten Antriebseinheiten 35, 36, 43, 45 kann durch eine Bedienkonsole (nicht dargestellt) erfolgen, die fest an der Anordnung 1 befestigt ist, durch ein Kabel mit der Anordnung 1 verbunden ist oder kabellos mit der Anordnung 1 kommuniziert. Es ist auch möglich, dass eine programmierbare Steuereinheit zur Ansteuerung der Antriebseinheiten 35, 36, 43, 45 vorgesehen ist. Die Programmierung kann sich dabei auf bestimmte, immer wiederkehrende Abläufe beschränken, die über die Bedienkonsole aufgerufen werden können. Es ist aber auch möglich, dass die Steuereinheit die Anordnung 1 vollautomatisch betreibt. Dies ist insbesondere dann möglich, wenn für die Öffnung der Ofentüren 12 Antriebe vorhanden sind und die Steuereinheit diese Antriebe steuern kann. Über die Steuereinheit können optional auch die Backöfen selbst gesteuert werden.

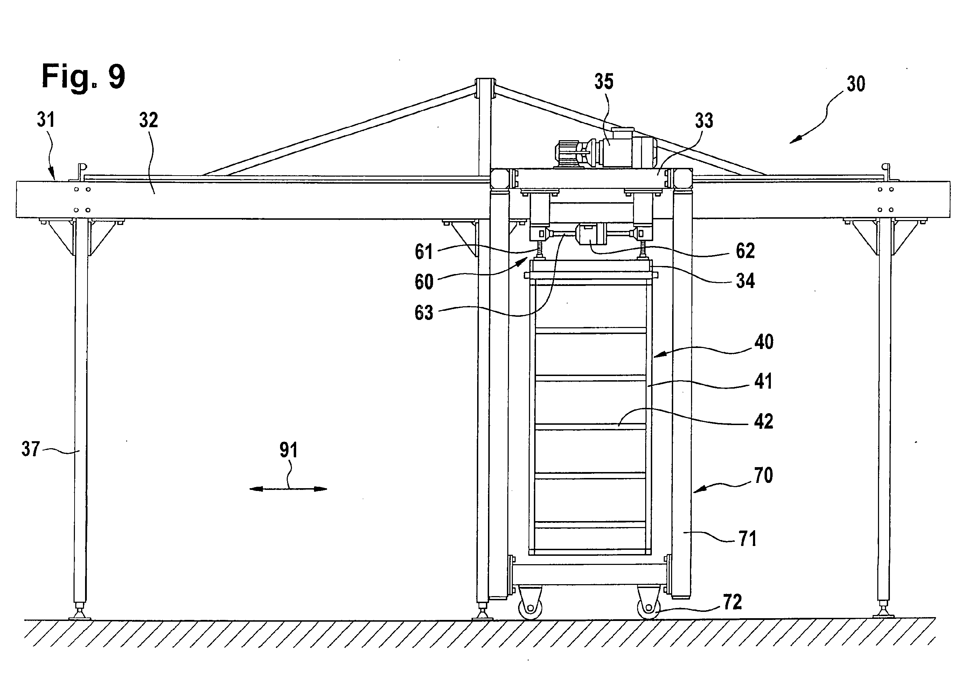

In Figur 9 ist ein zweites Ausführungsbeispiel einer erfindungsgemäßen Beschickungsvorrichtung 30 gezeigt. Da diese der Beschickungsvorrichtung 30 der erfindungsgemäßen Anordnung aus den Figuren 1 bis 8 in weiten Teilen ähnelt, wird auf obige Erläuterungen der Figuren 1 bis 8 verwiesen. Im Folgenden wird lediglich auf die Unterschiede bzw. Erweiterungen der Beschickungsvorrichtung 30 aus Figur 9 gegenüber der aus den Figuren 1 bis 8 eingegangen.

Gemäß dem zweiten Ausführungsbeispiel ist am Wagen 33 zwischen den Schienen 32 der Führungsvorrichtung 31 und den Schienen 34 am Wagen 33 eine Hubvorrichtung 60 vorgesehen. Mit Hilfe dieser Hubvorrichtung 60 kann der Abstand zwischen den Schienen 32, 34 der Führungsvorrichtung 31 bzw. des Wagens 33 variabel verstellt werden. Indem die Schiene 32 der Führungsvorrichtung 31 fest ist und die Gondel 40 an den Schienen 34 des Wagens aufgehängt ist, lässt sich die Gondel 40 - und damit auch die Ladertische 42 in der Gondel 40 - vertikal verfahren. Damit können auch Backwagen (20, nicht dargestellt), deren Bleche (21, nicht dargestellt) untereinander zwar die gleichen Abstände aufweisen wie die Platten (14, nicht dargestellt) in den Öfen (10, nicht dargestellt), jedoch insgesamt in einer anderen Höhe angeordnet sind, be-und entladen werden.

Die Hubvorrichtung 60 ist als Spindelhubsystem ausgeführt, bei dem die Schienen 34 über Spindeln 61 am Wagen 33 befestigt sind. Alle Spindeln 61 sind über ein gemeinsames Antriebselement 62 angetrieben, welches über Wellen 63 und ggf. Getriebe (nicht dargestellt) mit den Spindeln 61 mechanisch verbunden ist. Indem ein gemeinsames Antriebselement 62 für alle Spindeln vorgesehen ist, kann ein Verkanten der Hubvorrichtung 60 nahezu ausgeschlossen werden.

Am Wagen 33 ist eine Stützvorrichtung 70 vorgesehen. Die Stützvorrichtung 70 umfasst Stützelemente 71 die sich vom Wagen 33 in Richtung Boden erstrecken. Am vom Wagen 33 entfernten Ende der Stützvorrichtung 70 sind Bodenrollen 72 vorgesehen, mit denen die Stützvorrichtung 70 in Verschieberichtung 91 über den Boden rollen kann. Da die Stützvorrichtung 70 an dem Teil des Wagens 33 befestigt ist, der sich ausschließlich in Verschieberichtung 91 bewegt, wird die Bewegungsfähigkeit des Wagens 33 in keiner Weise eingeschränkt. Da die Stützvorrichtung 70 sich über die Bodenrollen 72 auf dem Boden abstützt, kann sie Kräfte vom Wagen 33 in Richtung des Bodens ableiten. Die Gewichtskraft der Gondel 40 und der darin ggf. befindlichen Backwaren braucht dadurch nicht mehr allein durch die Schiene 32 der Führungsvorrichtung 31 getragen werden, sondern wird wenigstens teilweise über die Stützvorrichtung 70 abgeleitet. Die Führungsvorrichtung 31 kann schwächer dimensioniert und damit kostengünstiger ausgeführt sein.

## Patentansprüche

1. Beschickungsvorrichtung (30) zur Beschickung von Backöfen (10) mit Backwaren, **dadurch gekennzeichnet, dass** wenigstens ein in eine Beschickungsrichtung (90) aus einer Gondel (40) ausfahrbarer Ladertisch (42) zum Aufkrabbeln oder Ablegen von Backwaren vorgesehen ist, wobei die Gondel (40) an einer Führungsvorrichtung (31) aufgehängt ist und eine erste Antriebseinheit (35) zum Verschieben der Gondel (40) entlang der Führungsvorrichtung (31) parallel zu dem wenigstens einen Ladertisch (42) in eine Verschieberichtung (91) mit einer Komponente senkrecht zur Beschickungsrichtung (90) vorgesehen ist.

2. Vorrichtung nach Anspruch 1, **dadurch gekennzeichnet, dass** an der Führungsvorrichtung (31) eine zweite Antriebseinheit (36) zum Verschieben der Gondel (40) in Beschickungsrichtung (90) vorgesehen ist.

3. Vorrichtung nach Anspruch 1 oder 2, **dadurch gekennzeichnet, dass** der wenigstens eine Ladertisch (42) oder die Gondel (40) in Richtung der Flächennormalen des wenigstens einen Ladertisches (42) verfahrbar ist.

4. Vorrichtung nach einem der vorhergehenden Ansprüche, **dadurch gekennzeichnet, dass** wenigstens zwei Ladertische (42) vorgesehen sind.

5. Vorrichtung nach Anspruch 4, **dadurch gekennzeichnet, dass** für jeden Ladertisch (42) ein drittes Antriebselement (43) vorgesehen ist, so dass die Ladertische (42) separat ausfahrbar sind.

6. Vorrichtung nach Anspruch 4, **dadurch gekennzeichnet, dass** für wenigstens zwei Ladertische (42) ein gemeinsames drittes Antriebselement (43) vorgesehen ist, so dass die wenigstens zwei Ladertische (42) gemeinsam ausfahrbar sind.

7. Vorrichtung nach Anspruch 6, **dadurch gekennzeichnet, dass** die Ladertische (42) einzeln von dem gemeinsamen dritten Antriebelement (43) entkoppelbar sind.

8. Vorrichtung nach einem der vorhergehenden Ansprüche, **dadurch gekennzeichnet, dass** der oder die Ladertische (42) auch entgegen der Beschickungsrichtung (90) aus der Gondel (40) ausfahrbar sind.

9. Vorrichtung nach einem der vorhergehenden Ansprüche, **dadurch gekennzeichnet, dass** die Gondel (40) in der Ebene des wenigstens einen Ladertisches (42) drehbar ist.

10. Vorrichtung nach einem der vorhergehenden Ansprüche, **dadurch gekennzeichnet, dass** an dem von der Führungsvorrichtung (31) entfernten Ende der Gondel (40) oder an einer Stützvorrichtung (70), die sich von der Aufhängung der Gondel (40) zum Boden erstreckt, Bodenrollen vorgesehen sind, wobei an den Bodenrollen vorzugsweise Abstreifer und/oder Bürsten zur Entfernung von Rückständen auf der Rollfläche vorgesehen sind.

11. Vorrichtung nach einem der vorhergehenden Ansprüche, **dadurch gekennzeichnet, dass** der wenigstens eine Ladertisch (42) Stützrollen aufweist.

12. Vorrichtung nach einem der vorhergehenden Ansprüche, **dadurch gekennzeichnet, dass** der wenigstens eine Ladertisch (42) eine Saugdüse, vorzugsweise mit Bürste, aufweist.

13. Vorrichtung nach einem der vorhergehenden Ansprüche, **dadurch gekennzeichnet, dass** zur Ansteuerung der Antriebseinheiten (35, 36, 43, 35) eine feste, eine verkabelte und/oder kabellose Bedienkonsole vorgesehen ist.

14. Vorrichtung nach einem der vorhergehenden Ansprüche, **dadurch gekennzeichnet, dass** zur Ansteuerung der Antriebseinheiten (35, 36, 43, 35) eine programmierbare Steuereinheit vorgesehen ist.

15. Anordnung (1) umfassend wenigstens einen Backofen (10) mit mehrstöckig angeordneten Platten (14) im Backraum (11) zur Aufnahme von Backwaren, wenigstens eine Aufgabestelle (20) mit einem austauschbaren Rollwagen (21) mit mehrstöckig angeordneten Blechen (22) zur Aufnahme von Backwaren und eine Beschickungsvorrichtung (30) zum Transport von Backwaren zwischen den Blechen (22) des Rollwagens (21) und den Platten (14) des Backofens (10), **dadurch gekennzeichnet, dass**
die Beschickungsvorrichtung (30) wenigsten einen in eine Beschickungsrichtung (90) aus einer Gondel (40) ausfahrbaren Ladertisch (42) zum Aufkrabbeln oder Ablegen von Backwaren aufweist, die Gondel (40) an einer Führungsvorrichtung (31) aufgehängt ist und eine erste Antriebseinheit (35) zum Verschieben der Gondel (40) entlang der Führungsvorrichtung (31) parallel zu dem wenigstens einen Ladertisch (42) in eine Verschieberichtung (91) mit einer Komponente senkrecht zur Beschickungsrichtung (90) vorgesehen ist.

16. Anordnung nach Anspruch 15, **dadurch gekennzeichnet, dass** die Beschickungsvorrichtung gemäß einem der Ansprüche 2 bis 14 ausgebildet ist.

17. Anordnung nach Anspruch 15 oder 16, **dadurch gekennzeichnet, dass** die vertikale Anordnung der einzelnen Platten (14) und Bleche (22) aller Backöfen (10) und Rollwagen (20) gleich ist.

18. Anordnung nach Anspruch 15, 16 oder 17, **dadurch gekennzeichnet**, eine Steuereinheit vorgesehen ist, die dazu ausgebildet ist, den Ladertisch (42) um einen einstellbaren Vertikalabstand höher als zu beladendene Platte (14) zu positionieren.

19. Anordnung nach einem der Ansprüche 15 bis 18, **dadurch gekennzeichnet, dass** die Platten (14) des wenigstens einen Backofens (10) Steinplatten sind.

20. Anordnung nach einem der Ansprüche 15 bis 19, **dadurch gekennzeichnet, dass** eine automatische Türöffnungsvorrichtung an der Ofentür (12) des wenigstens einen Backofens (10) vorgesehen ist.

21. Anordnung nach einem der Ansprüche 15 bis 20, **dadurch gekennzeichnet, dass** die Anordnung ein Auskühlsystem mit einem Paternosterturm umfasst.
